# EUROPÄISCHE PATENTSCHRIFT

(11) **EP 1 999 075 B1**
(45) Veröffentlichungstag und Bekanntmachung des Hinweises auf die Patenterteilung: **20.01.2010**
(21) Anmeldenummer: 06793876.1
(22) Anmeldetag: 27.09.2006
(51) Int. Cl.: C02F 3/00

(54) **VORRICHTUNG ZUM ABZUG VON PROZESSWASSER**
APPARATUS FOR TAKING OFF PROCESS WATER
DISPOSITIF D'ÉVACUATION D'EAU DE TRAITEMENT

(43) Veröffentlichungstag der Anmeldung: 10.12.2008
(73) Patentinhaber: Finklenburg, Norman, 51789 Lindlar (DE); Hilden, Hans-Johann, 53783 Eitorf (DE); Ziegler, Markus, 51709 Marienheide (DE); Gries, Michael, 51766 Engelskirchen (DE)
(72) Erfinder: Finklenburg, Norman, 51789 Lindlar (DE); Hilden, Hans-Johann, 53783 Eitorf (DE); Ziegler, Markus, 51709 Marienheide (DE); Gries, Michael, 51766 Engelskirchen (DE)
(74) Vertreter: Vorberg, Jens
(86) Internationale Anmeldenummer: PCT/EP2006/066818
(87) Internationale Veröffentlichungsnummer: WO 2008/037296

(56) Entgegenhaltungen:
- DE-A1- 10 341 397
- DE-A1-102005 036 364
- US-A- 4 040 954
- US-A- 5 421 995
- US-A- 5 475 486
- US-A1- 2004 011 737
- DATABASE WPI Derwent Publications Ltd., London, GB; AN 1979-88768B XP002435375 -& SU 651 828 A (SEV KAVKAZSKIJ VNI K I TSVETME [SU]) 15. März 1979 (1979-03-15)

## Beschreibung

Gegenstand der vorliegenden Erfindung ist eine Vorrichtung zum Abzug von Feststoff belastetem Prozesswasser aus einem Sedimentierbecken einer Kläranlage.

Im Rahmen der Abwasserreinigung in einer biologischen Kläranlage durchläuft das zu behandelnde Abwasser eine Mehrzahl von Reinigungsstufen, in denen unter Einsatz verschiedener Reinigungstechniken Schmutz und Schadstoffe aus dem Abwasser entfernt werden, um es aus einem Nachklärbecken als Rückspülwasser dem natürlichen Wasserkreislauf wieder zuzuführen. Verschiedene Klärstufen beruhen auf einer Absetzung von Schwebstoffen aus dem zu behandelnden Wasser in einem Sedimentierschritt, für den das Abwasser einem Sedimentierbecken zugeleitet wird, in welchem das zu behandelnde Abwasser in der Regel eine sehr niedrige Strömungsgeschwindigkeit aufweist. In diesem Sedimentierbecken findet ein Absetzvorgang statt, bei dem die im Wasser befindlichen Schwebstoffe unter dem Einfluss der Gravitation absinken und sich am Boden des Sedimentierbeckens ansammeln. Beispiele hierfür sind das bereits erwähnte Nachklärbecken bzw. die vor und nach dem Faulturm angeordneten Vor- bzw. Nacheindicker.

Insbesondere im Bereich der Vor- bzw. Nacheindicker stellt sich die technische Aufgabe, das oberhalb des Sediments befindliche Wasser, welches oftmals noch einen recht hohen Belastungsgrad mit Schwebe- bzw. Schadstoffen aufweist, einer erneuten Behandlung in Vorgelagerten Klärstufen zuzuführen. Hierzu wird im laufenden Betrieb das oberhalb des Sediments befindliche Prozesswasser über eine Abzugleitung mittels einer Pumpe abgezogen und einer Vorgelagerten Klärstufe zugeführt. Die Ansaugöffnung der Abzugleitung ist dabei in der Höhe variabel ausgeführt, oftmals dergestalt, dass die Höhe mittels einer Hubvorrichtung verändert werden kann. Durch geeignete Techniken wird die Höhe der Ansaugöffnung der Abzugleitung im Sedimentierbecken so eingestellt, dass das angesaugte Prozesswasser einen Schwebstoffgehalt aufweist, der einen voreingestellten Grenzwert nicht überschreitet. In einem Sedimentierprozess, der nahe am Gleichgewicht geführt wird, ist der Schwebstoffgehalt eine unmittelbare Funktion der Höhe der Ansaugöffnung im Sedimentierbecken. Übersteigt der Schwebstoffgehalt des über die Abzugleitung abgezogenen Prozesswassers den voreingestellten Grenzwert, so wird die Ansaugöffnung der Abzugleitung mittels der Hubvorrichtung angehoben, bis der voreingestellte Grenzwert wieder unterschritten wird.

Stand der Technik zur Erfassung des Schwebstoffgehalts des abgezogenen Prozesswassers ist es, an der Ansaugöffnung der Pumpleitung, die sich stets im zu behandelnden Abwasser im Sedimentierbecken befindet, eine Sonde anzuordnen, die dazu vorgesehen ist, den Feststoffgehalt im Abwasser in der unmittelbaren Umgebung der Ansaugöffnung zu erfassen. Geeignet hierfür sind z.B. die unter der Bezeichnung "Liquisonic" von der Firma Sensotech GmbH, Magdeburg Barleben, Deutschland angebotenen Sonden, die auf einem Ultraschallanalysator basieren und beispielsweise die Dichte des umgebenen flüssigen Mediums erfassen. Typische Einheit ist hier die "Trübungseinheit TE" in "Formacin" (TE/F).

Da die im Sedimentierbecken von Kläranlagen zu behandelnden Abwässer häufig sehr hohe Schwebstoffkonzentrationen bis hin zu groben mechanischen Verunreinigungen aufweisen, muss die Ansaugöffnung der Abzugleitung nebst in der Nähe angeordneter Sonde effektiv vor Verschmutzung geschützt werden. Hierzu werden die Ansaugöffnung der Abzugleitung und die Sonde häufig mit einem Schutzkorb versehen, der im praktischen Betrieb einer Kläranlage abhängig vom Belastungsgrad des zu behandelnden Abwassers in mehr oder weniger kurzen Abständen gereinigt werden muss. Zu einer solchen Reinigung muss die Abzugleitung nebst Sonde und Schutzkorb vollständig aus dem Sedimentierbecken entfernt werden. Dies ist einerseits mit hohem personellem Aufwand und andererseits mit einem Risiko verbunden dass die empfindliche Sonde beschädigt oder gar zerstört wird.

Aus der US 4,040,954 A ist ein System zur automatisierten Zugabe eines Flockungsmittels mittels Trübungsmessung von Prozesswasser bekannt. Hierzu wird die Ansaugöffnung einer Abzugleitung automatisiert in der Höhe verfahren, um den Trübungswert des abgezogenen Prozesswassers konstant zu halten. Zur Messung der Trübung wird das abgezogene Prozesswasser an einem außerhalb des Sedimentierbeckens angeordneten photoelektrischen Trübungssensor vorbeigeführt. Hierzu wird das Prozesswasser einem Reservoir zugeführt, aus welchem ein kontinuierlicher Strom von Prozesswasser in Form eines Flüssigkeitsvorhangs an einem berührungslos arbeitenden optischen Sensor vorbeigeführt wird.

Die US 5,421,995 A betrifft ein System zum automatisierten Abzug von Prozesswasser aus einem Sedimentierbecken. Es wird vorgeschlagen, mittels eines außerhalb des Sedimentierbeckens angeordneten optischen Sensors den Feststoffgehalt im abgezogenen Prozesswasser zu erfassen. Dabei ist der Sensor auf die Absorption von Licht über eine Messstrecke empfindlich. Fällt die Transmission unter einen voreingestellten Wert, so wird der Abzug von Prozesswasser durch Schließen eines in der Abzugleitung angeordneten Ventils gestoppt.

Die US 2004/0011737 A1 offenbart ein System, mittels welchem Prozesswasser aus einem Sedimentierbecken abgezogen werden kann. Dabei kann die Ansaugöffnung ebenfalls in der Höhe verfahren werden. Der Feststoffgehalt im abgezogenen Prozesswasser kann mittels eines außerhalb des Sedimentierbeckens angeordneten Sensors erfasst werden.

Die SU 651 828 A offenbart ein System zur Bestimmung der Lage einer klar/trüb-Grenzschicht in einem Sedimentierbecken. Mittels einer in der Höhe verstellbaren Ansaugöffnung wird über eine Abzugleitung Prozesswasser aus dem Sedimentierbecken abgezogen und deren Feststoffgehalt bestimmt mittels eines optischen Absorptionssensors, der außerhalb des Sedimentierbeckens angeordnet ist.

Aufgabe der vorliegenden Erfindung ist es daher, eine Vorrichtung zum Abzug von schwebstoffbelastetem Prozesswasser aus einem Sedimentierbecken einer Kläranlage anzugeben, die verlängerte Reinigungsintervalle bei gleichzeitig erhöhter Standzeit der eingesetzten Sonde zur Trübungsmessung aufweist.

Gelöst wird diese Aufgabe durch eine Vorrichtung gemäß des Hauptanspruchs.

Eine erfindungsgemäße Vorrichtung zum Abzug von schwebstoffbelastetem Prozesswasser aus einem Sedimentierbecken einer Kläranlage weist eine Abzugleitung auf, die an ihrem ersten Ende eine Ansaugöffnung für Prozesswasser ausbildet. Das erste Ende ist daher dazu vorgesehen, in einer definierten Höhe in das Sedimentierbecken eingebracht zu werden. Weiterhin ist in die Abzugleitung eine Pumpe zum Abzug von schwebstoffbelastetem Prozesswasser aus dem Sedimentierbecken eingefügt. Weiterhin ist eine Sonde zur Erfassung des Feststoffgehalts oder einer zum Feststoffgehalt äquivalenten Größe im von der Pumpe angesaugten Prozesswasser vorgesehen. Weiterhin ist eine Hubvorrichtung umfasst, die dazu vorgesehen ist, die Höhe der Ansaugöffnung der Abzugleitung im Sedimentierbecken kontrolliert einzustellen.

Erfindungsgemäß ist nun in der Abzugleitung außerhalb des Sedimentierbeckens eine Messstrecke angeordnet, wobei die Sonde zur Erfassung des Feststoffgehalts im von der Pumpe angesaugten Prozesswasser an der außerhalb des Sedimentierbeckens ausgebildeten Messstrecke angeordnet ist.

Die erfindungsgemäße Vorrichtung zum Abzug von schwebstoffbelastetem Prozesswasser realisiert mehrere Vorteile. Indem auf eine Trübungsmessung bzw. eine Messung des Feststoffgehalts im angesaugten Prozesswasser innerhalb des Sedimentierbeckens verzichtet wird, kann in der Regel auf eine Sonde in explosionsgeschützter Ausführung verzichtet werden, da die außerhalb des Sedimentierbeckens ausgebildete Messstrecke in ausreichendem Abstand der in der Regel explosionsgefährdeten Atmosphäre, die das Sedimentierbecken umgibt, angeordnet werden kann. Weiterhin sind Wartungsarbeiten an der Sonde auf deutlich einfachere Weise als bei der aus dem Stand der Technik vorbekannten Vorrichtung möglich, da die an der außerhalb des Sedimentierbeckens angeordnete Messstrecke einen unmittelbaren Zugriff auf die Sonde durch Wartungspersonal ermöglicht. Darüber hinaus bietet die Anordnung der Sonde außerhalb des Sedimentierbeckens den Vorteil, dass die empfindliche Sonde von den nach wie vor erforderlichen Reinigungsarbeiten am Filterkorb, welcher die Ansaugöffnung der Abzugleitung umgibt, nicht mehr betroffen ist. Auch können die Reinigungsintervalle gegenüber der aus dem Stand der Technik vorbekannten Vorrichtung verlängert werden, da eine Verschmutzung des Filterkorbs an der Ansaugöffnung der Abzugleitung nur den Strömungswiderstand längs der Abzugleitung erhöht, aber keinen negativen Einfluss mehr auf die von der Sonde durchgeführte Trübungs- bzw. Fettstoffgehaltsmessung hat. Auf diese Weise kann ein höherer Verschrnutzungsgrad des Ansaugkorbs in Kauf genommen werden, ohne dass die Steuerung des Prozesswasserabzugs aus dem Sedimentierbecken in Mitleidenschaft gezogen wird.

Erfindungsgemäß ist die Messstrecke der Vorrichtung so ausgebildet, dass sie gegen Trockenfallen geschützt ist. Dies wird dadurch erzielt, dass die Messstrecke als gedückerter Leitungsabschnitt ausgebildet ist. Als gedückerter Leitungsabschnitt, wird ein Leitungsabschnitt bezeichnet, der einen gegenüber dem Niveau der restlichen Abzugleitung abgesenkten Bereich aufweist. Indem die Messstrecke gegen Trockenfallen geschützt wird, kann sichergestellt werden, dass die im Bereich der Messstrecke angeordnete Sonde, die bevorzugt auf optischen Messverfahren basiert, beim Trockenfallen der Abzugleitung nicht hartnäckig durch eingetrocknete Feststoffe aus dem Prozesswasser verschmutzt wird.

Die Alltagstaugilchkeit der erfindungsgemäßen Vorrichtung insbesondere bei der Verwendung in nördlichen Breiten kann deutlich erhöht werden, indem die Messstrecke beheizbar ausgebildet ist. Insbesondere ist es hierzu möglich, im Bereich der Messstrecke elektrisch beheizbare Elemente sowie eine Temperaturüberwachung anzubringen. Die Temperaturüberwachung steuert die Heizelemente bei Unterschreiten einer voreingestellten Minimaltemperatur an, so dass die Temperatur der Messstrecke und insbesondere des in der Messstrecke befindlichen Prozesswasser stets mindestens einem voreingestellten Schwellwert entspricht. Eine Beheizbarkeit der Messstrecke bietet einerseits den Vorteil, dass ein Einfrieren der Messstrecke und/oder der Sonde sicher vermieden werden kann. Darüber hinaus gibt es aber auch Sonden zur Messung des Feststoffgehalts, deren Messergebnisse deutlich von der Temperatur des analysierten Prozesswassers abhängen. In einem solchen Fall kann die Messgenauigkeit der Sonde verbessert werden, wenn die Temperatur des von der Sonde analysierten Prozesswassers möglichst konstant bei einem bekannten Wert gehalten wird.

Der Schutz gegen Einfrieren sowie die thermische Stabilisierung des zu analysierenden Prozesswassers können noch verbessert werden, wenn die Messstrecke thermisch isoliert ausgebildet wird. Dies kann insbesondere durch eine doppelwandige Ausführung der Prozesswasserführenden Leitungen im Bereich der Messstrecke erreicht werden.

Weitere Vorteile ergeben sich, wenn die Vorrichtung zusätzlich zu der erfindungsgemäß vorgesehenen Messstrecke einen transparenten Inspektionsabschnitt ausbildet, der eine visuelle Inspektion des angesaugten Prozesswassers erlaubt. Auf diese Weise steht dem Bedienungspersonal der Kläranlage neben dem Ergebnis der von der Sonde durchgeführten Prozesswasseranalyse auch eine direkte visuelle Inspektionsmöglichkeit des abgezogenen Prozesswassers zur Verfügung. Diese kann insbesondere vorteilhaft sein, um evtl. Fehlfunktionen der Sonde unmittelbar zu erkennen.

In einer vorteilhaften Weiterbildung der erfindungsgemäßen Vorrichtung umfasst diese eine Steuereinheit zum automatisierten Abzug von Feststoffbelastetem Prozesswasser aus dem Sedimentierbecken, wobei die Steuereinheit zur zyklischen Ausführung der folgenden Verfahrensschritte eingerichtet ist:
1. Erfassen des Feststoffgehalts TS (ist) im von der Pumpe angesaugten Prozesswasser mittels der Sonde,
2. Vergleichen des erfassten Ist-Feststoffgehalts TS (ist) mit einem voreingestellten Soll-Feststoffgehalt TS (soll),
3. Anheben der im Sedimentierbecken angeordneten Ansaugöffnung der Abzugleitung mittels der Hubvorrichtung um einen voreingestellten Wert Δh wenn TS (ist) größer ist als TS (soll), und
4. Absenken der im Sedimentierbecken angeordneten Ansaugöffnung der Abzugleitung mittels der Hubvorrichtung um einen voreingestellten Wert Δh wenn TS (ist) kleiner ist als TS (soll).

Eine entsprechende Steuereinheit kann beispielsweise als frei programmierbare SPS-Einheit ausgeführt werden, wobei der voreingestellte Soll-Feststoffgehalt TS (soll) sowie die Schrittweite Δh der Höhenverstellung angepasst an die Gegebenheiten der Klärstufe eingestellt werden können, in der die erfindungsgemäße Vorrichtung verwendet wird.

Besonders bevorzugt ist die Verwendung der erfindungsgemäßen Vorrichtung zum Abzug von Feststoffbelastetem Prozesswasser aus dem Sedimentierbecken eines vor dem Faulturm einer Kläranlage angeordneten Voreindickers oder aus dem Sedimentierbecken eines hinter dem Faulturm der Kläranlage eingeordneten Nacheindickers.

Weiterhin ist besonders bevorzugt die Verwendung einer erfindungsgemäßen Vorrichtung zum Abzug von Feststoffbelastetem Prozesswasser aus einem Sedimentierbecken einer Kläranlage in dem Fall, dass sich im Sedimentierbecken explosive Gase bilden können, so dass das Sedimentierbecken von einer Explosionsschutzzone umgeben ist. Aufgrund des Aufbaus der erfindungsgemäßen Vorrichtung ist es möglich, die Messstrecke außerhalb der Explosionsschutzzone anzuordnen. Hierdurch ist es möglich, auf explosionsgeschützte Ausführungen der Sonde zu verzichten. Bei der bisher im Stand der Technik üblichen gattungsgemäßen Vorrichtung musste die Sonde zwingend im explosionsgefährdeten Bereich, also in der Explosionsschutzzone angeordnet werden. Dafür war es bislang erforderlich, für die Sonde eine explosionsgeschützte Ausführung zu verwenden, was die Kosten der gattungsgemäßen Vorrichtung erhöhte.

Weitere Merkmale und Vorteile der erfindungsgemäßen Vorrichtung sowie vorteilhafte Verwendungsmöglichkeiten ergeben sich aus den Unteransprüchen sowie den nachfolgenden Ausführungsbeispielen, die anhand der Zeichnung näher erläutert werden. In dieser zeigen:
- Fig. 1:: eine schematische Darstellung einer erfindungsgemäßen Vorrichtung in Seitenansicht,
- Fig. 2:: eine schematische Darstellung der Messstrecke der erfindungsgemäßen Vorrichtung aus Figur 1,
- Fig. 3:: eine vergrößerte Ansicht der Messstrecke aus Figur 2 mit eingefügter Sonde,
- Fig. 4:: eine Frontansicht der Sonde aus Fig. 3,
- Fig. 5:: einen vergrößerten Schnitt durch die Messstrecke einer erfindungsgemäßen Vorrichtung in einer alternativen Ausgestaltung, und
- Fig. 6:: eine schematische Darstellung der im Bereich des Faulturms einer biologischen Kläranlage angeordneten Klärstufen.

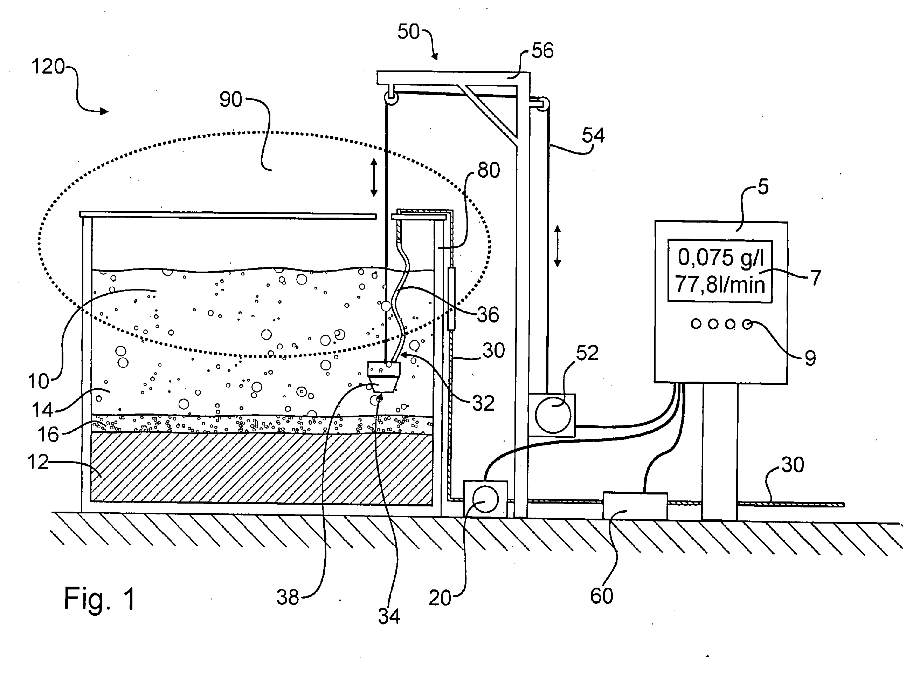

Figur 1 zeigt eine erfindungsgemäße Vorrichtung 1, die am Sedimentierbecken eines Nacheindickers, einer biologischen Kläranlage angeordnet ist, der sich im Nachlauf des Faulturms der Kläranlage befindet. Das Sedimentierbecken ist mit 10 bezeichnet und ist mit Feststoffbelastetem Wasser, welches aus dem Faulturm abgezogen wurde, gefüllt. Im Sedimentierbecken weist das zu behandelnde Wasser nur eine geringe Fließgeschwindigkeit auf, so dass die vom Wasser mitgeführten Feststoffe unter dem Einfluss der Gravitation zu Boden sinken. Entsprechend bildet sich im Sedimentierbecken 10 eine bodennahe, hoch feststoffhaltigen Sediment-(Schlamm)schicht 12 aus, über der sich eine nur noch verhältnismäßig schwach mit Feststoffen belastete Prozesswasserschicht 14 ausbildet. Beide Schichten sind voneinander durch eine Übergangsschicht 16 getrennt, in der eine starke Zunahme der Feststoffkonzentration als Funktion der Höhe im Sedimentierbecken 10 zu beobachten ist. Die erfindungsgemäße Vorrichtung 1 ist nun dazu vorgesehen, das in der oberen Schicht 14 befindliche Prozesswasser aus dem Sedimentierbecken 10 abzuziehen und erneut dem Reinigungsprozess durch eine Rückführung in eine Vorgelagerte Klärstufe zuzuführen. Dabei soll eine voreingestellte maximale Feststoffkonzentration im Rückgeführten Prozesswasser nicht überschritten werden.

Da das dem Sedimentierbecken 10 zugeleitete Abwasser nach wie vor biologische Feststoffe mitführt, laufen während des Sedimentierprozesses weiterhin Fäulnisprozesse ab, die zur Bildung von explosiven Fäulnisgasen führen können. Daher ist in einem bestimmten Umkreis um das Sedimentierbecken 10 eine Explosionsschutzzone 90 ausgebildet, innerhalb derer elektrischer Geräte nur in einer besonderen explosionsgeschützten Ausführung verwendet werden dürfen.

Die erfindungsgemäße Vorrichtung umfasst nun eine Abzugleitung 30, die mit ihrem ersten Ende 32, an dem eine Ansaugöffnung 34 ausgebildet ist und die mittels eines Schutzkorbs 38 gegen das Ansaugen von groben mechanischen Verunreinigungen geschützt ist, in die Prozesswasserschicht 14 im Sedimentierbecken 10 eingebracht ist. Dabei ist der Frontabschnitt 36 der Abzugleitung 30 flexibel ausgebildet, so dass die Höhe der Ansaugöffnung 34 im Sedimentierbecken 10 mittels einer Hubvorrichtung 50 in vorgegebenen Grenzen variiert werden kann.

Die Hubvorrichtung 50 ist als Kran mit einem Ausleger 56 ausgebildet, an dessen Spitze an einem Seil 54 das erste Ende 32 der Abzugleitung 30 mit der Ansaugöffnung 34 und dem Schutzkorb 38 aufgehängt ist. Das Seil 54 wird über zwei Umlenkrollen umgelenkt und von der Seiltrommel eines Antriebs 52 aufgenommen. Mittels des Antriebs 52 kann dann das Seil 54 auf bzw. abgerollt werden, so dass sich die Höhe der Ansaugöffnung 34 im Sedimentierbecken 10 einstellen lässt.

Am von der Ansaugöffnung 34 abgewandten Ende des flexiblen Frontabschnitts 36 der Abzugleitung 30 ist der flexible Frontabschnitt 36 mit der im weiteren Verlauf als metallische Rohrleitung ausgebildeten Abzugleitung 30 verbunden. Die dann metallische Abzugleitung 30 wird über die obere Abdeckung des Sedimentierbeckens 10 hinausgeführt und entlang der Außenseite des Sedimentierbeckens 10 einer Pumpe 20 zugeführt. Diese Pumpe 20 saugt über die Abzugleitung 30 Prozesswasser aus dem Sedimentierbecken 10, um diese einer Vorgelagerten Klärstufe der biologischen Kläranlage zuzuführen.

In einer vorteilhaften alternativen Ausgestaltung ist die Pumpe 20 ebenfalls am Seil 54 aufgehängt und unmittelbar im Sedimentierbecken 10 angeordnet. In dieser Anordnung hat es sich als besonders vorteilhaft herausgestellt, wenn die Ansaugöffnung 34 im Sedimentierbecken 10 nach oben orientiert wird.

Hinter der Pumpe 20 ist in der Abzugleitung 30 eine erfindungsgemäße Messstrecke 60 ausgebildet, die in einem Gehäuse 62 untergebracht ist und auf deren Aufbau in Folgenden noch genauer eingegangen wird.

An die Messstrecke 60 schließt sich im Wesentlichen nur noch die Prozesswasser-Rückführleitung zur Vorgelagerten Klärstufe an.

Zur Steuerung der erfindungsgemäßen Vorrichtung ist außerhalb der Explosionsschutzzone 90 des Sedimentierbeckens 10 eine zentrale Steuereinheit 5 angeordnet, welche eine Anzeige 7 und Bedienelemente 9 aufweist. Die zentrale Steuereinheit 5 ist dabei vorzugsweise als frei programmierbare SPS Steuerungseinheit ausgebildet, die entsprechend der Gegebenheiten der Kläranlage frei programmiert werden kann. Im gezeigten Ausführungsbeispiel ist die Anzeige 7 dazu vorgesehen, den von der an der Messstrecke 60 angeordneten Sonde 40 (in Figur 1 nicht dargestellt) erfassten Feststoffgehalt im über die Abzugleitung 30 zurückgeführten Prozesswasser anzuzeigen (hier: 0,075 g/l) sowie den Rückgeführten Fluss an Prozesswasser (hier: 77,8 l/min.). Die Bedienelemente 9 sind dazu vorgesehen, bestimmte Steuerungsfunktionen der zentralen Steuereinheit 5 auszulösen oder zu unterbrechen bzw. die Anlage in Betrieb oder außer Betrieb zu setzen.

Weiterhin ist an der Außenseite des Sedimentierbeckens 10 ein Inspektionsabschnitt 80 in der Abzugleitung 30 ausgebildet, der zur direkten visuellen Kontrolle des über die Abzugleitung 30 zurückgeführten Prozesswassers dient. In seiner einfachsten Form ist der Inspektionsabschnitt 80 als gläserner Rohrabschnitt ausgebildet, durch den ein Benutzer unmittelbar auf den in der Abzugleitung 30 geführten Prozesswasserstrom blicken kann. Für einen Bediener der erfindungsgemäßen Vorrichtung ist anhand von Färbung und Trübung eine Fehlfunktion der Sonde 40 oder der Steuerungseinheit 5 unmittelbar erkennbar.

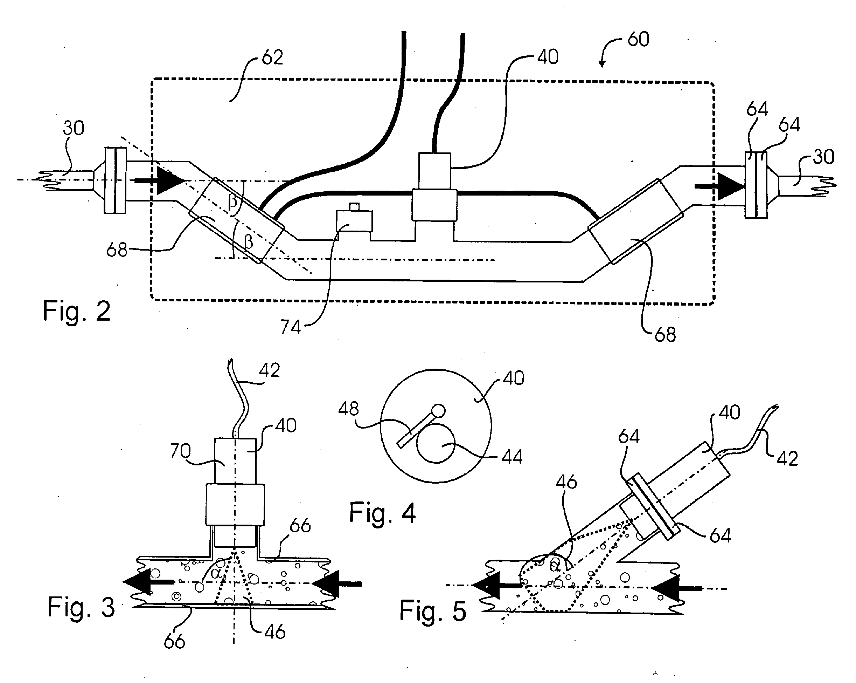

Figur 2 zeigt nun einen Schnitt durch die Messstrecke 60, welche stromabwärts der Pumpe 20 in der Abzugleitung 30 angeordnet ist. Die Messstrecke 60 besteht im Wesentlichen aus einem gedückerten Rohrabschnitt, welcher einlass- und auslassseitig mit Flanschen 64 zum Anschluss an die Abzugleitung 30 versehen ist. Der gedückerte Rohrabschnitt ist an vier Positionen um einen Winkel β abgeknickt, so dass sich ein im Wesentlichen U-förmiger Verlauf ergibt der Winkel β liegt vorzugsweise zwischen 15° und 60° insbesondere bei 45°. Im Bereich der beiden abgewickelten Schenkel des gedückerten Rohrabschnitts sind außenseitig elektrische Heizmanschetten 68 angebracht, die elektrisch mit der zentralen Steuereinheit 5 verbunden sind und von dieser angesteuert werden, wenn ein am gedückerten Rohrabschnitt angebrachter Temperaturfühler (nicht gezeigt) eine unterhalb einer voreingestellten Soll-Temperatur liegende Ist-Temperatur anzeigt.

Der gesamte gedückerte Rohrabschnitt ist dabei aus hochfestem rostfreiem Stahl ausgebildet, wobei der Innendurchmesser des gedückerten Rohrabschnitts im Bereich von 10 cm liegt. Selbstverständlich sind auch andere Innendurchmesser möglich, wobei der besonders geeignete Innendurchmesser im Wesentlichen von der pro Zeitaufwand zurückzuführenden Menge an Prozesswasser bestimmt ist.

Im tiefstgelegenen Abschnitt des gedückerten Rohrabschnitts ist oberseitig eine Einführöffnung für eine Sonde 40 zur Erfassung der Feststoffkonzentration im zurückgeführten Prozesswasser vorgesehen.

Weiterhin ist hier eine Entlüftung 74 vorgesehen, die bei Abstellen der Pumpe 20 den Trübwasserabzug aus dem Sedimentierbecken 10 unterbricht.

Wie aus den Figuren 3 und 4 ersichtlich wird, weist die Sonde 40 ein im Wesentlichen zylindrisches Gehäuse mit einem frontseitigen Messfenster 44 auf. Die Sonde 40 wird dabei so in die Zutrittsöffnung der gedückerten Messstrecke 60 eingefügt, dass sie mit ihrem Messfenster 44 fast bis in den die gedückerte Messstrecke 60 durchfließenden Prozesswasserstrom hineinragt.

Die Sonde 40 basiert vorzugsweise auf einem optischen Messverfahren, bei welchem die Rückstreuintensität von in einem Messkegel 46 eingestrahlter Infrarotstrahlung erfasst wird. Im praktischen Einsatz hat sich u.a. das unter der Bezeichnung "Solitax RM3" angebotene Prozessfotometer zur Messung von Trübung und Feststoffgehalt von Flüssigkeiten bewährt, welches von der Dr. Bruno Lange GmbH & Co. KG, 40549 Düsseldorf vertrieben wird. Die Solitax RM 3-Sonde basiert auf einem kombinierten Infrarot-Absorptions-Streulichtverfahren, welches sowohl die Erfassung geringster Trübungswerte nach DIN EN 27027 als auch die Erfassung hoher Schlammgehalte ermöglicht.

Neben der Verwendung von auf optischen Verfahren basierenden Sonden 40 ist weiterhin auch die Verwendung von beispielsweise auf Ultraschallverfahren basierenden Sonden möglich. Darüber hinaus können alle zur Verwendung im relevanten Trübungs- bzw. Feststoffgehaltbereich geeigneten Sonden 40, die auf alternativen Messverfahren basieren, zum Einsatz kommen.

Im aus Figur 3 ersichtlichen Ausführungsbeispiel weist die auf einem optischen Messverfahren basierende Sonde 40 frontseitig einen Scheibenwischer 48 auf, bei welchem bei Bedarf (ggf. automatisiert) das Messfenster 44 gereinigt werden kann. Weiterhin ist beim aus Figur 3 ersichtlichen Ausführungsbeispiel die Sonde 40 mit ihrer Längsachse im Wesentlichen quer zur Strömungsrichtung des Prozesswassers in der gedückerten Messstrecke angeordnet, so dass die Symmetrieachse des Messkegels 46 ebenfalls im Wesentlichen senkrecht zur Strömungsrichtung steht.

Wie aus Figur 3 weiterhin ersichtlich, ist die metallische Rohrleitung des gedückerten Rohrabschnitts zumindest im unmittelbar an die Sonde 40 angrenzenden Bereich doppelwandig ausgeführt, wobei der zwischen den Wandungen gelegene Bereich evakuiert ist und auf diese Weise die thermisch Hochisolierende Vakuumkammer 66 ausbildet. Die Kombination aus der elektrischen Heizung 68 und der durch die Vakuumkammer 66 realisierten thermischen Isolierung der gedückerten Messstrecke 60 im Bereich der Sonde 40 führt zu einer hervorragenden Einfriersicherheit der erfindungsgemäßen Vorrichtung.

Eine alternative Anordnung der Sonde 40 in der gedückerten Messstrecke 60 ist aus Figur 5 ersichtlich. Dabei ist die Sonde 40 im Wesentlichen an gleicher Stelle wie im aus Figur 2 ersichtlichen Ausführungsbeispiel in die gedückerte Messstrecke 60 eingefügt. Im Gegensatz zum Ausführungsbeispiel nach Figur 3 ist jetzt jedoch die Längsachse der Sonde 40, die wiederum vom vorgenannten Solitax-Typ sein kann, um einen Winkel α gegen die Strömungsrichtung des in der gedückerten Messstrecke 60 strömenden Prozesswassers geneigt. Insbesondere ist hier ein Winkel zwischen 90 und 180° geeignet, wobei ein Winkel von etwa 120 bis 150° bevorzugt wird. Wie aus Figur 5 ersichtlich, ist dann der Messkegel 46 gegen die Strömungsrichtung des Prozesswassers in der gedückerten Messstrecke 60 geneigt. Im aus Figur 5 ersichtlichen Ausführungsbeispiel ist die Sonde 40 nicht wie im Ausführungsbeispiel gemäß Figur 3 mittels einer Überwurfmutter 70 in der Einführöffnung 72 der gedückerten Messstrecke 60 fixiert. Vielmehr bildet die Einführöffnung 72 an ihrem Ende einen Flansch 64 aus ebenso wie die Sonde 40. Die Sonde 40 wird dann in die Einführöffnung 72 eingesetzt und die beiden Flansche 64 miteinander verschraubt. In allen Ausführungsbeispielen ist die Sonde 40 über ein Sondenkabel 42 mit der zentralen Steuereinheit 5 verbunden.

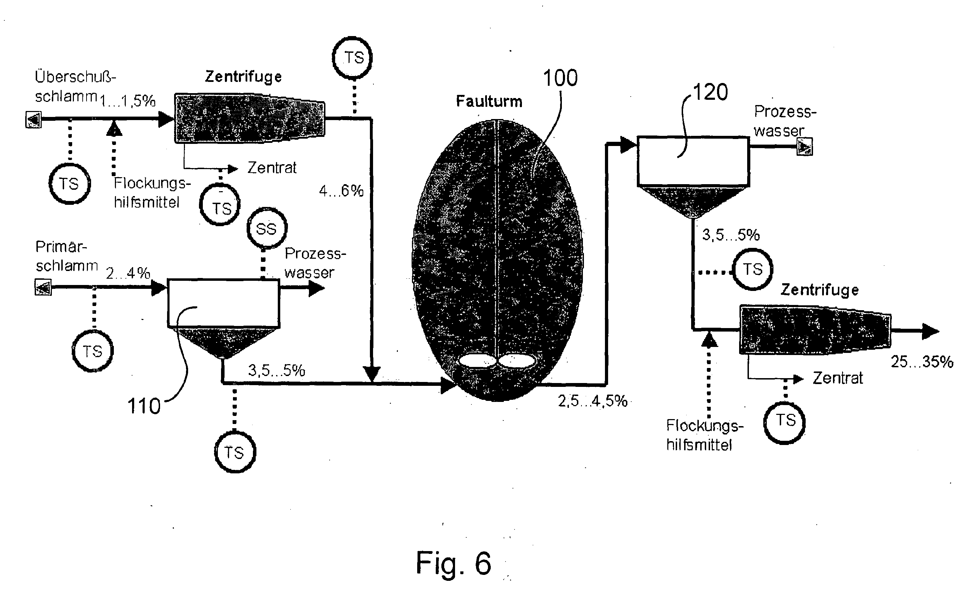

Aus Figur 6 sind die an den Faulturm 100 einer biologischen Queranlage angrenzenden Klärstufen schematisch dargestellt. Dem Primärschlamm, der dem Faulturm 100 zugeführt wird, wird in einem Voreindicker 110 Prozesswasser entzogen, welches über eine Rückführleitung einer Vorgelagerten Klärstufe zugeführt wird. Dem aus dem Faulturm 100 abgezogenen Klärschlamm wird dann in einem Nacheindicker 120 erneut Prozesswasser entzogen, welches wiederum über eine Rückführleitung einer Vorgelagerten Klärstufe zugeführt wird. Sowohl der Voreindicker 110 als auch der Nacheindicker 120 weisen Sedimentierbecken 10 auf und sind somit grundsätzlich für eine Verwendung der erfindungsgemäßen Vorrichtung 1 geeignet.

In einer bevorzugten Weiterbildung ist die zentrale Steuereinheit 5 dazu eingerichtet, die von der Sonde 40 erfasste Feststoffkonzentration im über die Ansaugöffnung 34 der Abzugleitung 30 abgezogenen Prozesswasser zu bestimmen. Die zentrale Steuereinheit 5 vergleicht den gemessenen Ist-Wert der Feststoffkonzentration TS (ist) mit einem voreingestellten Soll-Wert TS (soll). Übersteigt der gemessene Ist-Wert TS (ist) den voreingestellten Soll-Wert TS (soll), so ist die zentrale Steuereinheit 5 dazu eingerichtet, die Ansaugöffnung 34 der Abzugleitung 30 mittels der Hubvorrichtung 50 in einem Steuerungsschritt um die Höhe Δh im Sedimentierbecken 10 anzuheben. Auf diese Weise nimmt bei Vorliegen einer gleichgewichtsnahen Sedimentierungsverteilung die Feststoffkonzentration im abgezogenen Prozesswasser ab.

Unterschreitet die gemessene Feststoffkonzentration TS (ist) im abgezogenen Prozesswasser den voreingestellten Soll-Wert TS (soll) um mehr als einen voreingestellten Toleranzwert Δ TS, so liegt die tatsächliche Feststoffkonzentration im abgezogenen Prozesswasser auf einem deutlich über den akzeptablen Wert liegenden Niveau. D.h., für eine Rückführung des Prozesswassers ist auch eine höhere Feststoffkonzentration vertretbar. In diesem Fall ist die zentrale Steuerungseinheit 5 dazu eingerichtet, die Ansaugöffnung 34 der Abzugleitung 30 um einen definierten Höhenschritt Δh im Sedimentierbecken 10 abzusenken.

Die vorgenannten Verfahrensschritte werden zyklisch durchlaufen mit einer Wiederholrate von einigen Durchläufen pro 5 Minuten, um die Feststoffkonzentration im Rückgeführten Prozesswasser stets im Bereich des voreingestellten Soll-Werts TS (soll) zu halten. Insbesondere ist es möglich, hier den Toleranzbereich ΔTS auf den Wert Null zu setzen, so dass das von der zentralen Steuereinheit 5 ausgeführte Verfahren dazu führt, dass das von der erfindungsgemäßen Vorrichtung 1 aus dem Sedimentierbecken 10 abgezogene Prozesswasser im Wesentlichen stets eine Feststoffkonzentration aufweist, die mit dem voreingestellten Soll-Wert TS (soll) übereinstimmt.

### Bezugszeichen

- 1: Vorrichtung zum Abzug von Prozesswasser
- 5: zentrale Steuereinheit
- 7: Anzeige
- 9: Bedienelement
- 10: Sedimentierbecken
- 12: Sedimentschicht
- 14: Prozesswasserschicht
- 16: Übergangsschicht
- 20: Pumpe
- 30: Abzugleitung
- 32: erstes Ende
- 34: Ansaugöffnung
- 36: flexibler Frontabschnitt
- 38: Schutzkorb
- 40: Sonde
- 42: Sondenkabel
- 44: Messfenster
- 46: Messkegel
- 48: Scheibenwischer
- 50: Hubvorrichtung
- 52: Antrieb
- 54: Seil
- 56: Ausleger
- 60: Messtrecke
- 62: Gehäuse
- 64: Anschlussflansch
- 66: Vakuumkammer
- 68: Heizmanschette
- 70: Überwurfmutter
- 74: Entlüftung
- 80: Inspektionsabschnitt
- 90: Explosionsschutzzone
- 100: Faulturm
- 110: Voreindicker
- 120: Nacheindicker

## Patentansprüche

1. Vorrichtung (1) zum Abzug von Feststoffbelastetem Prozesswasser aus einem Sedimentierbecken (10) einer Kläranlage, die folgenden Merkmale aufweisend:
a. eine Abzugleitung (30), die
i. an ihrem ersten Ende (32) eine Ansaugöffnung (34) für Prozesswasser ausbildet,
ii. dazu vorgesehen ist, mit dem ersten Ende (32) in das Sedimentierbecken (10) eingebracht zu werden,
iii. an ihrem zweiten Ende (36) mit der Pumpe (20) verbunden ist,
b. eine Pumpe (20) zum Abzug von Feststoffbeiastetem Prozesswasser aus dem Sedimentierbecken (10), die an die Abzugsleitung (309 angeschlossen ist,
c. eine Sonde (40) zur Erfassung des Feststoffgehafts oder einer zum Feststoffgehalt äquivalenten Größe im von der Pumpe (20) angesaugten Prozesswasser,
d. eine Hubvorrichtung (50), die dazu vorgesehen ist, die Höhe der Ansaugöffnung (34) der Abzugleitung (30) im Sedimentierbecken (10) einzustellen,
**dadurch gekennzeichnet, dass**
e. die Vorrichtung (1) weiterhin eine Messstrecke (60) umfasst, die
i. als Leitungsabschnitt ausgebildet ist, der in der Abzugleitung (30) angeordnet ist,
ii. dazu vorgesehen ist, außerhalb des Sedimentierbeckens (10) angeordnet zu werden, und
iii. so ausgebildet ist, dass sie gegen Trockenfallen geschützt ist, indem sie als gedückerter Leitüngsabschnitt aüsgebildet ist und
f. die Sonde (40) an der Messtrecke (60) angeordnet ist.

2. Vorrichtung gemäß Anspruch 1, **dadurch gekennzeichnet, dass** die Messtrecke (60) beheizbar ausgebildet ist.

3. Vorrichtung gemäß Anspruch 1, **dadurch gekennzeichnet, dass** die Messtrecke (60) thermisch isoliert ausgebildet ist.

4. Vorrichtung gemäß Anspruch 1, **dadurch gekennzeichnet, dass** die Sonde (40) dazu ausgebildet ist, mittels eines optischen Messverfahrens den Feststoffgehalt im angesaugten Prozesswasser zu erfassen.

5. Vorrichtung gemäß Anspruch 1, **dadurch gekennzeichnet, dass** in der Abzugleitung (30) ein transparenter Inspektionsabschnitt (80) ausgebildet ist, der eine visuelle Inspektion des angesaugten Prozesswassers erlaubt.

6. Vorrichtung gemäß Anspruch 1, **dadurch gekennzeichnet, dass** die Vorrichtung weiterhin eine Steuereinheit (90) zum automatisierten Abzug von Feststoffbelastetem Prozesswasser aus dem Sedimentierbecken (10) umfasst, die zur zyklischen Ausführung der folgenden Verfahrensschritte eingerichtet ist:
a. Erfassen des Feststoffgehalts TS(ist) im von der pumpe (20) angesaugten Prozesswasser mittels der sonde (40),
b. Vergleichen des erfassten Feststoffgehalts TS(ist) mit einem voreingestellten Soll-Feststofifgehalt TS(soll),
c. Anheben der im Sedimentierbecken (10) angeordneten Ansaugöffnung (34) der Abzugleitung (30) um einen voreingestellten Wert Δh, wenn TS(ist) größer ist als TS(soll), und
d. Absenken der im Sedimentierbecken (10) angeordneten Ansaugöffnung (34) der Abzugleitung (30) um einen voreingestellten Wert Δh, wenn TS(ist) kleiner ist als TS(soll).

7. Verwendung einer Vorrichtung gemäß Anspruch 1 zum Abzug von Feststoffbelastetern Prozesswasser aus dem Sedimentierbecken (10) eines vor dem Faulturm (100) der Kläranlage (1) angeordneten Voreindickers (110) oder eines hinter dem Faulturm (100) der Kläranlage (1) angeordneten Nacheindickers (120).

8. Verwendung gemäß Anspruch 7, **dadurch gekennzeichnet, dass** das Sedimentierbecken (10) von einer Explosionsschutzzone (90) umgeben ist und die Messstrecke (60) außerhalb der Explosionsschutzzone (90) angeordnet wird.

## Claims

1. A device (1) for withdrawing solid-charged process water from a sedimentation basin (10) of a sewage treatment facility, having the following features:
a. a withdrawal line (30), which
i. implements an intake opening (34) for process water at its first end (32),
ii. is provided for the purpose of being introduced at the first end (32) into the sedimentation basin (10),
iii. is connected to the pump (20) at its second end (36),
b. a pump (20) for withdrawing solid-charged process water from the sedimentation basin (10), which is connected to the withdrawal line (30),
c. a probe (40) for detecting the solid content or a variable equivalent to the solid content in the process water sucked in by the pump (20),
d. a lifting device (50), which is provided for the purpose of setting the height of the intake opening (34) of the withdrawal line (30) in the sedimentation basin (10),
**characterized in that**
e. the device (1) also comprises a measuring section (60), which
i. is implemented as a line section, which is situated in the withdrawal line (30),
ii. is provided for the purpose of being situated outside the sedimentation basin (10), and
iii, is implemented so that it is protected from running dry, **in that** it is implemented as a stooped line section, and
f. the probe (40) is situated on the measuring section (60).

2. The device according to Claim 1, **characterized in that** the measuring section (60) is implemented as heatable.

3. The device according to Claim 1, **characterized in that** the measuring section (60) is implemented as thermally insulated.

4. The device according to Claim 1, **characterized in that** the probe (40) is implemented to detect the solid content in the sucked-in process water using an optical measuring method.

5. The device according to Claim 1, **characterized in that** a transparent inspection section (80) is implemented in the withdrawal line (30), which allows a visual inspection of the sucked-in process water.

6. The device according to Claim 1, **characterized in that** the device also comprises a control unit (90) tor the automated withdrawal of solid-charged process water from the sedimentation basin (10), which is set up for the cyclic execution of the following method steps:
a. detecting the solid content TS(actual) in the process water sucked in by the pump (20) using the probe (40),
b. comparing the detected solid content TS(actual) to a preset target solid content TS(target),
c. raising the intake opening (34) of the withdrawal line (30), which is situated in the sedimentation basin (10), by a preset value Δh if TS(ackual) is greater than TS(targal), and
d. lowering the intake opening (34) of the withdrawal line (30), which is situated in the sedimentation basin (10), by a preset value Δh if TS(actual) is less than TS(target).

7. A use of a device according to Claim 1 for withdrawing solid-charged process water from the sedimentation basin (10) of a primary treatment tank (110), which is situated before the digestion tank (100) of the sewage treatment facility (1), or a finishing tank (120), which is situated after the digestion tank (100) of the sewage treatment facility (1).

8. The use according to Claim 7, **characterized in that** the sedimentation basin (10) is enclosed by an explosion protection zone (90) and the measuring section (60) is situated outside the explosion protection zone (90).

## Revendications

1. Dispositif (1) pour évacuer les eaux de traitement chargées de matières solides hors d'un bassin de sédimentation (10) d'une station d'épuration des eaux usées, présentant les caractéristiques suivantes :
a. une conduite d'évacuation (30) qui
i. forme, à sa première extrémité (32), un orifice d'aspiration (34) pour les eaux de traitement,
ii. est prévue pour être introduite, par ladite première extrémité (32), dans le bassin de sédimentation (10),
iii. est reliée, à sa deuxième extrémité (36), à la pompe (20),
b. une pompe (20) pour évacuer les eaux de traitement chargées de matières solides hors dudit bassin de sédimentation (10), ladite pompe étant connectée à ladite conduite d'évacuation (30),
c. une sonde (40) pour détecter, dans les eaux de traitement aspirées par ladite pompe (20), la teneur en matières solides ou une grandeur équivalente au teneur en matières solides,
d. un dispositif de levage (50) qui est prévu pour régler la hauteur de l'orifice d'aspiration (34) de la conduite d'évacuation (30) dans le bassin de sédimentation (10),
**caractérisé par le fait que**
e. le dispositif (1) comprend en outre un trajet de mesure (60) qui
i. est réalisé en tant que tronçon de conduite lequel est disposé dans ladite conduite d'évacuation (30),
ii. est prévu pour être disposé à l'extérieur du bassin de sédimentation (10), et
iii. est conçu de manière à être protégé contre un assèchement en étant réalisé sous forme d'un tronçon de conduite à zone abaissée, et que
f. la sonde (40) est disposée sur ledit trajet de mesure (60).

2. Dispositif selon la revendication 1, **caractérisé par le fait que** ledit trajet de mesure (60) est réalisé de manière à être chauffable.

3. Dispositif selon la revendication 1, **caractérisé par le fait que** ledit trajet de mesure (60) est réalisé de manière à être thermiquement isolé.

4. Dispositif selon la revendication 1, **caractérisé par le fait que** ladite sonde (40) est conçu pour détecter, au moyen d'un procédé de mesure optique, la teneur en matières solides dans les eaux de traitement aspirées.

5. Dispositif selon la revendication 1, **caractérisé par le fait que** dans ladite conduite d'évacuation (30) est réalisée une section transparente d'inspection (80) qui permet une inspection visuelle des eaux de traitement aspirées.

6. Dispositif selon la revendication 1, **caractérisé par le fait que** le dispositif comprend en outre une unité de commande (90) pour l'évacuation automatisée d'eaux de traitement chargées de matières solides hors du bassin de sédimentation (10), qui est adaptée pour la mise en oeuvre cyclique des étapes de procédé suivantes :
a. détecter, au moyen de ladite sonde (40), la teneur en matières solides TS(ist) dans les eaux de traitement aspirées par la pompe (20),
b. comparer la teneur détectée en matières solides TS(ist) à une teneur en matières solides prévue préréglée TS(soll),
c. soulever l'orifice d'aspiration (34) de la conduite d'évacuation (30), disposé dans le bassin de sédimentation (10), d'une valeur préréglée Δh si TS(ist) est supérieure à TS(soll), et
d. abaisser l'orifice d'aspiration (34) de la conduite d'évacuation (30), disposé dans le bassin de sédimentation (10), d'une valeur préréglée Δh si TS(ist) est inférieure à TS(soll).

7. Utilisation d'un dispositif selon la revendication 1 pour évacuer les eaux de traitement chargées de matières solides hors du bassin de sédimentation (10) d'un pré-épaississeur (110) monté en amont du digesteur (100) de la station d'épuration des eaux usées (1) ou d'un post-épaississeur (120) monté en aval du digesteur (100) de la station d'épuration des eaux usées (1).

8. Utilisation selon la revendication 7, **caractérisé par** le fait quc Ic bassin de sédimentation (10) est entouré d'une zone de protection contre l'explosion (90) et que ledit trajet de mesure (60) est disposé hors de ladite zone de protection contre l'explosion (90).
